# FASCICULE DE BREVET EUROPEEN

(11) **EP 1 672 394 B1**
(45) Date de publication et mention de la délivrance du brevet: **18.04.2007**
(21) Numéro de dépôt: 04405778.4
(22) Date de dépôt: 16.12.2004
(51) Int. Cl.: G02B 3/12, G02B 1/06

(54) **Procédé de réalisation d'un dispositif à membrane en matière plastique et dispositif ainsi obtenu**
Verfahren zur Herstellung einer Vorrichtung mit einer Kunststoffmembran und so erhaltene Vorrichtung
Method for producing a device having a plastic membrane and device so manufactured

(43) Date de publication de la demande: 21.06.2006
(73) Titulaire: Ecole d'Ingénieurs ARC, 2400 Le Locle (CH); Comelec S.A., 2300 La Chaux-de-Fonds (CH)
(72) Inventeur: Keppner, Herbert, 2013 Colombier (CH); Benkhaira, Mustapha, 2300 La Chaux-de-Fonds (CH)
(74) Mandataire: GLN

(56) Documents cités:
- CH-A5- 591 090
- GB-A- 571 912
- GB-A- 1 551 733
- GB-A- 2 184 562
- US-A- 4 834 512
- US-A- 5 380 320
- US-B1- 6 188 525

## Description

La présente invention se rapporte au domaine des dispositifs à membrane. Elle concerne, plus précisément, un procédé de réalisation de microstructures à membrane en matière plastique, ainsi que des dispositifs obtenus par ce procédé.

L'invention trouve des applications intéressantes notamment, mais non exclusivement, dans le domaine de la micro-technique, par exemple pour la fabrication de micro-lentilles, de micro-canaux, de guides d'onde...

De façon plus précise, l'invention concerne un procédé de réalisation d'un dispositif à membrane, **caractérisé en ce qu**'il consiste à :
- se munir d'un substrat,
- y déposer un liquide, et
- recouvrir, par un procédé de dépôt à basse pression, ledit liquide et au moins la portion du substrat attenante au liquide d'un film mince continu homogène de matière plastique formant ladite membrane.

L'invention concerne également diverses formes de réalisation d'un dispositif obtenu par le procédé ci-dessus dans lequel le substrat forme, avec le liquide et la membrane, soit une lentille optique, soit un guide d'onde, soit un actuateur, soit encore un canal fluidique.

L'invention concerne enfin un procédé de réalisation d'une membrane, caractérisée en ce qu'il consiste à :
- se munir d'un substrat,
- y déposer un liquide,
- recouvrir, par un procédé de dépôt à basse pression, ledit liquide d'un film mince continu homogène de matière plastique formant ladite membrane, puis
- détacher celle-ci du liquide.

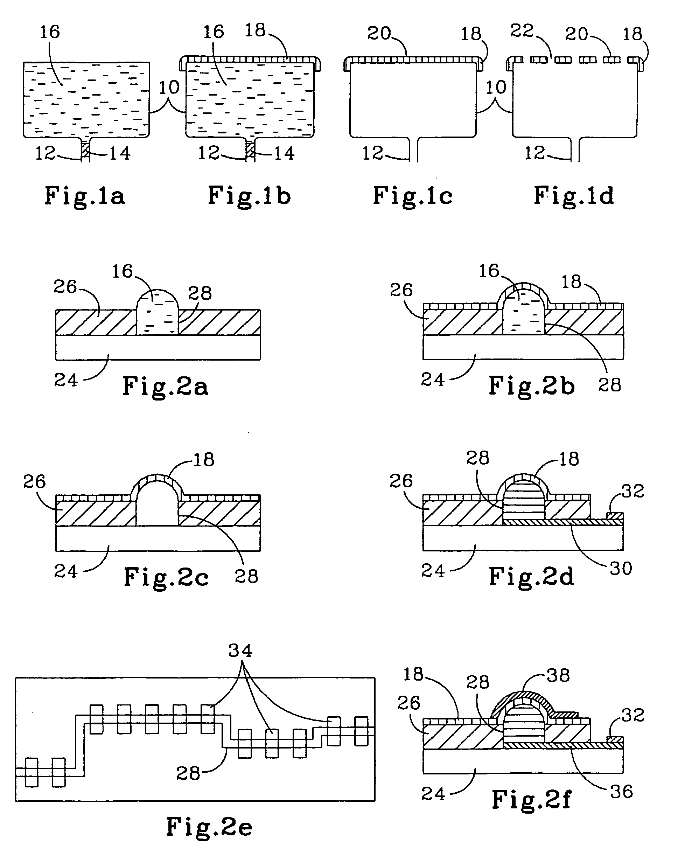

D'autres caractéristiques apparaîtront plus clairement à la lecture de la description qui suit, faite en référence aux dessins annexés, dans lesquels les figures 1 à 8 présentent différents dispositifs à membrane obtenus grâce au procédé selon l'invention, ainsi que leur mode de réalisation.

Comme déjà mentionné, l'invention concerne, en substance, le dépôt d'un film mince sur un liquide et, éventuellement, sur au moins la portion avoisinante de son substrat. Ce film est avantageusement constitué d'une substance connue pour ses propriétés de revêtement, telle que le parylène.

Le procédé de dépôt de parylène, encore appelé poly-para-xylylène, est bien connu de l'homme de métier. En effet, le parylène est un polymère s'apparentant à la famille des plastiques, utilisé comme revêtement pour de multiples applications dans les domaines de l'électronique, du médical, de l'optique, du spatial, de la micromécanique, etc... Déposé à basse pression (7Pa) par pyrolyse du di-para-xylylène, il polymérise à température ambiante sur tous types de substrats, formant une couche uniforme, homogène, incolore, épousant parfaitement toutes les aspérités et cavités, et d'épaisseur allant de la centaine de nanomètres à soixante microns environ.

Le parylène protège efficacement divers matériaux tels que le métal, le textile, le papier, le verre, le plastique, et autres, contre l'humidité, la corrosion et les attaques par les produits chimiques, acides ou solvants. Il forme une barrière électriquement isolante, stable thermiquement et biocompatible. Son dépôt peut être avantageusement effectué en utilisant l'équipement de la firme Comelec (La Chaux-de-Fonds, CH).

Bien que largement répandu dans de nombreuses industries, pour des applications variées, le revêtement parylène est, jusqu'à présent, cantonné aux matériaux solides.

La présente invention ouvre un tout nouveau champ d'investigation et offre des possibilités inédites et originales, en étendant le dépôt de parylène à certains matériaux liquides, remplissant des conditions spécifiques.

Selon l'invention, le dépôt de parylène sur la combinaison liquide - substrat se fait dans les conditions standard. La pyrolyse du di-para-xylylène est réalisée à 680°C, le monomère de para-xylylène venant polymériser à la surface de l'échantillon maintenu à la température ambiante. La pression dans la chambre de dépôt étant de 7Pa, la pression de vapeur saturante du liquide doit être inférieure à cette pression, afin de n'être pas vaporisé durant le dépôt. Idéalement, la pression de vapeur saturante du liquide est inférieure ou égale au dixième de la pression de dépôt, soit 0.7Pa. Toutefois, pour certaines applications bien particulières, la pression de vapeur saturante du liquide doit être de l'ordre de la pression de dépôt, comme explicité ultérieurement.

Par ailleurs, le liquide utilisé doit être chimiquement non réactif avec le parylène. Différentes huiles ont, par exemple, été testées avec succès, dont l'huile de pompe turbo-moléculaire, des huiles optiques, des huiles silicones, de la glycérine etc... Une liste non exhaustive des différents liquides susceptibles d'être employés pour le dépôt de parylène ainsi que de leurs propriétés est donnée dans le tableau suivant. Bien entendu, tout autre liquide remplissant les conditions précitées peut être employé pour le dépôt de parylène.

| Liquide | Formule chimique | Pression de Vapeur (Pa, 25°C) | Aspect |
|---|---|---|---|
| But-2-ène-1,4-diol | C₄H₈O₂ | 0.63 | Pâle, jaunâtre |
| Propantriol triacétate | C₉H₁₄O₆ | 0.33 | Liquide huileux |
| Tributyl Phosphate | C₁₂H₂₇O₄P | 0.53 | Clair, sans couleur |
| Acide sulfurique | H₂SO₄ | 7.9x10⁻³ | Huileux, sans couleur |
| Acides organiques | | | |
| Huiles de silicone | | Très faible | transparent |
| Huiles de pompes à vide | | <10⁻³ | transparent |
| Huiles optiques | | Très faible | Differents indices |
| Nonylphénol | C₆H₁₄(OH)C₉H₁₉ | 0.3 | Jaunâtre |
| 1,2 Diacétoxypropane | CH₃-CO-CH₂-CH(O-CO-CH₃)-CH₃ | Très faible | Jaunâtre |
| Liquides ioniques | | Très faible | |
| Cyhalodrin | C₂₃H₁₉CIF₃NO₃ | 10⁻⁶ | Clair, visqueux |

Dans la suite de la description, le mot 'liquide' désignera n'importe lequel des liquides listés ci-dessus.

Au terme du procédé, un film de parylène uniforme et continu recouvre l'ensemble liquide - substrat, formant ainsi une enveloppe épousant parfaitement ses contours. En particulier, il n'y a pas de discontinuité de la couche à l'interface liquide - substrat, ni de différence de qualité de couche entre la partie déposée sur le liquide et sur le substrat solide. Bien entendu, en fonction des besoins, moyennant un masquage approprié, le film peut être déposé seulement sur le liquide et la portion du substrat entourant le liquide.

Cette aptitude du parylène à se déposer sur un liquide, formant ainsi une membrane, peut être exploitée dans un grand nombre d'applications. Pour certaines d'entre elles, le liquide est éliminé après le dépôt et, dans ce cas, il est dit sacrificiel. Il peut également être conservé sous la membrane de parylène et faire partie intégrante du dispositif ainsi réalisé.

Dans la suite de ce document, plusieurs exemples de réalisation sont décrits, sans pour autant constituer une liste exhaustive des possibilités liées au procédé selon l'invention. Toutes les structures ainsi décrites peuvent être réalisées sur substrat souple ou rigide. Pour un type de substrat choisi, l'étalement du liquide et l'adhérence du parylène sur le substrat peuvent être contrôlés et optimisés soit par un traitement plasma, soit par l'application de couches moléculaires, connues sous le nom de SAM (Self Assembly Monolayers).

La figure 1 représente une membrane sélective et son procédé de fabrication en quatre étapes, à l'aide d'un liquide sacrificiel.
**Figure 1a**
   Un récipient 10 ayant un diamètre d'une centaine de microns à quelques millimètres et comportant une tubulure inférieure d'évacuation 12 obturée par un bouchon 14, est rempli d'un 'liquide' 16.
**Figure 1b**
   Le bord du récipient 10 et le 'liquide' 16 sont recouverts d'un film mince 18 de parylène qui adhère seulement au récipient.
**Figure 1c**
   Le liquide 16 est évacué du récipient 10 en retirant le bouchon 14. Le film mince 18 reste en place, formant ainsi une pellicule 20 tendue entre les parois du récipient 10.
**Figure 1d**
   La pellicule 20 est percée de micro-trous 22 par ablation laser afin de constituer une membrane sélective. Elle peut être également rendue poreuse par une attaque physico-chimique contrôlée de type 'Reactive Ion Etching' (RIE). Le dispositif ainsi réalisé forme un filtre à gaz ou autre fluide, de fabrication simple et bon marché.
   La figure 2 représente, en coupe transversale, la séquence de fabrication d'un canal fluidique à l'aide d'un liquide sacrificiel, ainsi que deux variantes particulièrement avantageuses de ce dernier.
**Figure 2a**
   Un substrat, constitué d'une plaque 24 recouverte d'une couche 26 d'un matériau pouvant être structuré, est représenté en coupe. Un exemple de matériau utilisable pour la couche 26 est la résine photosensible ou le 'blue tape' communément employé pour la découpe de plaquettes de silicium. Un canal 28, ouvert dans la couche 26 par un procédé d'attaque à disposition de l'homme de métier, est rempli d'un 'liquide' 16. Ce dernier et le matériau constituant la couche 26 sont choisis, en outre, de sorte que l'angle de contact entre le 'liquide' et le matériau soit supérieur ou égal à 20 degrés. Si le 'liquide' 16 est, par exemple, de l'huile, la couche 26 est constituée d'un matériau oléophobe, c'est à dire tendant à repousser l'huile. De cette façon, le 'liquide' 16 minimise sa surface de contact avec le matériau constituant la couche 26, et sa surface, lorsqu'il est dans le canal 28, est convexe. Cette propriété est également utile pour évacuer le 'liquide' 16 du canal 28, comme décrit par la suite.
**Figure 2b**
   Un film mince 18 de parylène est déposé sur l'ensemble substrat-'liquide' 16, venant ainsi obturer le canal 28 contenant le 'liquide' 16.
**Figure 2c**
   Le 'liquide' 16 est évacué du canal 28 par une ouverture pratiquée en l'une de ses extrémités. Le dispositif ainsi réalisé, par un procédé extrêmement simple, est un canal fluidique 28 fermé par une membrane de parylène. Ce canal 28 peut être employé pour le transport de tout fluide compatible avec les matériaux utilisés.
**Figure 2d**
   Le dispositif représenté se différencie du dispositif représenté en figure 2c par l'ajout d'une couche 30 d'un matériau piézo-électrique au fond du canal 28, déposée et structurée avant le dépôt de la couche 26. Cette couche 30 est, par ailleurs, rendue accessible lors de la structuration de la couche 26, afin de la connecter à une électrode 32. Une impulsion électrique transmise par celle-ci se transforme, grâce aux propriétés du matériau, en une impulsion physique provoquant une onde de choc au sein du fluide transporté par le canal 28.
**Figure 2e**
   Le canal fluidique 28, représenté en vue de dessus sur cette figure, est équipé d'une couche d'un matériau piézo-électrique structurée en une pluralité d'éléments rectangulaires 34 distribués le long dudit canal. Chacun des éléments 34 crée localement une onde de choc dans le fluide transporté, l'action légèrement désynchronisée de chaque élément par rapport à son voisin permettant la propagation du fluide dans le canal 28. Ainsi est fabriquée une micro-pompe péristaltique.
**Figure 2f**
   Une autre possibilité pour fabriquer une micro-pompe péristaltique consiste à déposer, en lieu et place de la couche piézo-électrique 30, une couche conductrice 36, si possible transparente, par exemple en ITO (Indium Tin Oxide) et à la structurer en éléments rectangulaires 34, comme précédemment. Une deuxième couche conductrice 38 est déposée sur la membrane de parylène et structurée en éléments rectangulaires 34 alignés avec les premiers. Une différence de potentiel appliquée entre chaque paire d'éléments 34 induit une déformation locale du film de parylène 18 agissant comme une contraction du canal 28. La propagation de cette contraction permet le transport du fluide présent dans le canal 28.

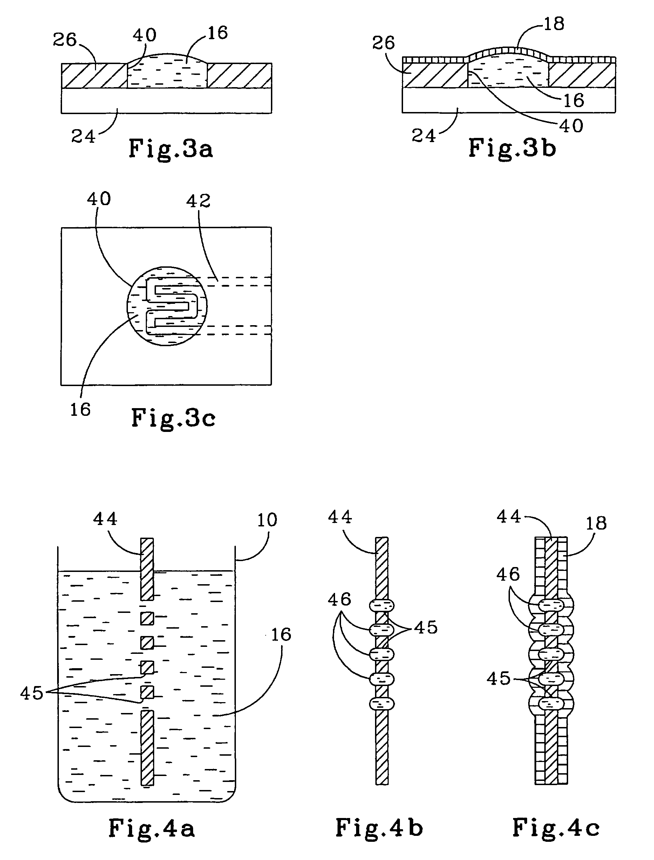

   La figure 3 représente un procédé de fabrication de micro-lentilles selon l'invention, ainsi qu'une variante particulièrement avantageuse de ce type de lentille.
**Figure 3a**
   Comme pour la fabrication d'un canal fluidique, un substrat constitué d'une plaque 24 recouverte d'une couche 26 d'un matériau pouvant être structuré, tel qu'une résine photosensible ou du 'blue tape', est représenté en coupe. Un trou circulaire 40, de diamètre compris entre un micron et plusieurs millimètres, est ouvert dans la couche 26 puis rempli d'un 'liquide' 16. La convexité de la goutte de 'liquide' ainsi formée dépend entièrement de la tension de surface du 'liquide' 16 et de l'énergie libre de la surface de la couche 26. Ainsi, la géométrie de la goutte de 'liquide' 16 est, d'une part, parfaitement reproductible pour un même matériau constituant la couche 26 et un même 'liquide' 16 et, d'autre part, adaptable en fonction des besoins de la lentille à fabriquer.
**Figure 3b**
   Un film mince 18 de parylène est déposé sur l'ensemble substrat-'liquide' 16, venant ainsi obturer le trou circulaire 40 contenant le 'liquide' 16. Le 'liquide' 16 est, cette fois, prisonnier de la membrane de parylène, et l'ensemble substrat-liquide-parylène forme une lentille de focale déterminée par les matériaux utilisés.
**Figure 3c**
   Dans une variante particulièrement intéressante de la micro-lentille, une résistance chauffante 42, constituée par une piste d'un matériau conducteur transparent, est logée sous le 'liquide' 16. Cette piste est fabriquée par dépôt et structuration d'une couche d'un matériau transparent conducteur, ce dépôt précédant celui de la couche 26. Lorsque la résistance chauffante 42 produit une élévation de température du 'liquide' 16, celui-ci se dilate, modifiant ainsi la géométrie de la lentille et ses propriétés optiques. Une lentille à focale variable est ainsi réalisée.
   La figure 4 présente un procédé de fabrication simplifié d'un réseau de micro-lentilles selon l'invention.
**Figure 4a**
   Un substrat 44 pouvant être rigide ou souple, et comportant une pluralité de trous circulaires 45 le traversant, est trempé dans un 'liquide' 16 contenu par un récipient 10. Le substrat 44 et le 'liquide' 16 sont choisis, d'une part, en fonction des critères de sélection du 'liquide' 16 déjà cités et, d'autre part, de sorte que la surface du substrat 44 repousse fortement le 'liquide' 16. Si le 'liquide' 16 est de l'huile, le matériau utilisé pour le substrat 44 doit être fortement oléophobe. Le 'blue tape' en combinaison avec de l'huile est un matériau compatible avec cette application.
**Figure 4b**
   Lorsque le substrat 44 est retiré du récipient 10, des gouttes 46 sont prisonnières des trous circulaires 45, tandis que la surface restante du substrat est exempte de 'liquide' 16, en raison des propriétés des matériaux choisis. La convexité des lentilles est importante en raison du principe du procédé lui-même, mais elle peut être adaptée selon les besoins.
**Figure 4c**
   Un film mince 18 de parylène est déposé sur les deux faces du substrat 44, enfermant ainsi les gouttes 46 prises dans les trous 45 du substrat 44. L'ensemble substrat 44-gouttes 46-membrane de parylène forme alors un réseau de micro-lentilles fabriqué par une technique simple et bon marché.

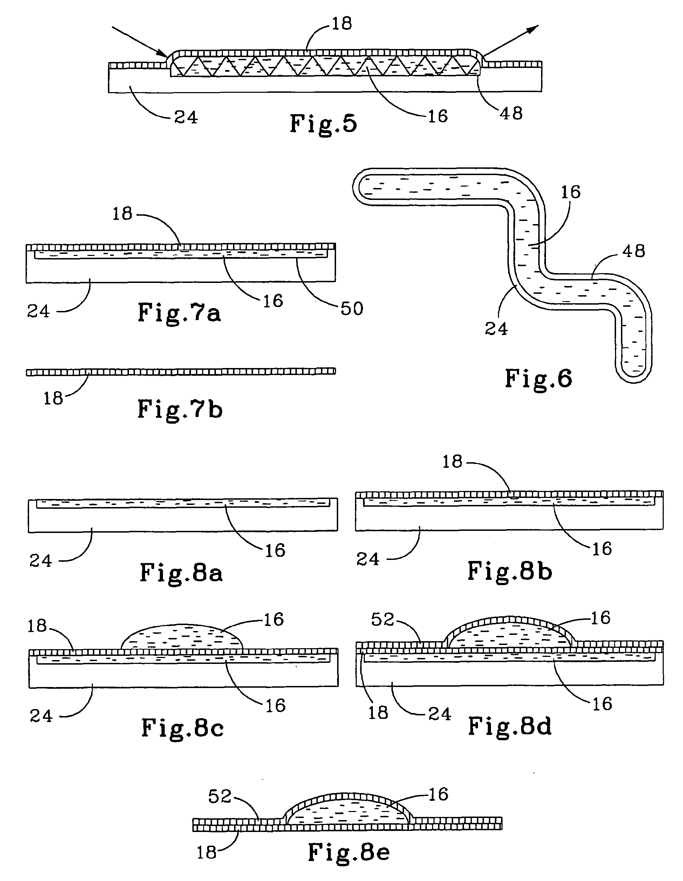

   La figure 5 représente, en coupe longitudinale, un guide d'onde fabriqué par le procédé selon l'invention. Un canal 48 gravé dans un substrat 24 est rempli d'un 'liquide' 16. Le matériau formant le substrat 24 et le 'liquide' 16 sont choisis de sorte que l'angle de contact entre le 'liquide' et le substrat soit suffisamment grand. De cette façon, la surface du 'liquide' 16 en bordure du canal 48 est convexe. En outre, il doit être tenu compte de l'indice des matériaux et des qualités optiques du 'liquide' 16.
   Le substrat 24 et le 'liquide' 16 sont recouverts d'un film mince 18 de parylène emprisonnant le 'liquide' 16 dans son logement. Le guide d'onde ainsi formé est particulièrement avantageux puisqu'il permet un couplage facilité de la lumière en entrée et en sortie du guide d'onde, sans l'intermédiaire d'un réseau de diffraction, et ceci en raison de la courbure du 'liquide' 16 en bordure du canal 48.
   Le dispositif représenté en vue de dessus sur la figure 6, est un micro-actuateur hydraulique. Il est constitué d'un substrat 24, flexible ou rigide, long en comparaison de sa largeur, et dans lequel est gravé un canal 48, rempli de 'liquide' 16 vérifiant les conditions de compatibilité avec le dépôt de parylène. Un film mince de parylène recouvre l'ensemble, de sorte que le 'liquide' 16 est enfermé dans son logement. Le dispositif ainsi fabriqué utilise la propriété d'incompressibilité du 'liquide' 16 pour générer un micro-déplacement contrôlé du 'liquide' 16 et du film de parylène. En effet, une pression exercée sur la membrane de parylène recouvrant le 'liquide' 16, en l'une des extrémités du dispositif, résulte en un léger déplacement du 'liquide' 16 et de la membrane de parylène en un autre point dudit dispositif. Cet actuateur présente l'avantage d'être entièrement hydraulique et adaptable à des déplacements microscopiques.
   La figure 7 présente un procédé de fabrication, selon l'invention, d'un film mince autoporteur.
**Figure 7a**
   Un substrat 24 est recouvert sur toute sa surface de 'liquide' 16, grâce à une creusure 50. Un film mince 18 de parylène est déposé sur l'ensemble, épousant parfaitement les aspérités du substrat 24 et la planéité du 'liquide' 16.
**Figure 7b**
   Le film mince 18 est séparé du substrat 24 et du 'liquide' 16, par exemple en découpant le film mince 18 à la limite entre le substrat 24 et le liquide 16. On notera que le film mince 18 se sépare sans difficulté du 'liquide' 16, puisqu'il n'y adhère pas. Sa face inférieure, précédemment au contact du 'liquide' 16, présente une morphologie de surface comparable à celle du 'liquide' 16. Ce type de surface extrêmement plane peut être utilisé, par exemple, comme référence pour un microscope à force atomique.
   Cette aptitude du film de parylène 18 à se détacher aisément d'un 'liquide' 16 par pelage, peut également être utilisée pour former un film autoporteur. Il suffit d'enrouler sur lui-même le film mince 18 ainsi constitué à l'instar d'un ruban de papier adhésif, puis de l'employer pour envelopper un quelconque objet. A cet effet, un mode de réalisation particulièrement avantageux consiste à déposer le parylène sur un substrat 24 ayant la forme d'une spirale et enduit de 'liquide' 16. Le film de parylène 18 déposé des deux côtés peut être détaché sans difficulté et former un ruban prêt à être enroulé.
   Ce type de film autoporteur peut également être réalisé de sorte que les propriétés des deux surfaces soient différentes. En effet, l'emploi d'un 'liquide' 16 ayant une pression de vapeur saturante proche de la pression de dépôt permet de modifier le début de croissance du film de parylène 18. Une réaction des molécules constituant le 'liquide' 16, présentes en phase gazeuse au voisinage du 'liquide' 16, avec le monomère de para-xylylène induit cette modification de la phase initiale de croissance du film. Selon le choix du 'liquide' 16, cette couche initiale peut avoir des propriétés mécaniques, électriques ou autres, différentes du film de parylène 'pur'.
   Enfin, en figure 8, un exemple de procédé de fabrication de lentille de contact selon l'invention, est exposé.
**Figure 8a**
   Un substrat 24 est recouvert de 'liquide' 16.
**Figure 8b**
   Un premier dépôt de parylène forme un film mince 18 sur le 'liquide' 16.
**Figure 8c**
   Une goutte de 'liquide' 16 est déposée sur le film mince 18. Le 'liquide' 16 est choisi en fonction de ses propriétés optiques et mécaniques. Sa tension de surface doit être telle que la goutte forme un angle déterminé avec le film de parylène 18.
**Figure 8d**
   Une deuxième couche de parylène 52 est déposée sur l'ensemble, venant sceller la goutte de 'liquide' 16 entre le premier film de parylène 18 et le deuxième 52.
**Figure 8e**
   Le film mince 18 est séparé du 'liquide' 16 sur lequel il reposait, l'ensemble membrane de parylène-goutte 16-membrane de parylène formant une lentille de contact de conception extrêmement simple.
   Ce procédé d'encapsulation d'un 'liquide' 16 entre deux membranes de parylène 18 et 52 peut donner lieu à des applications variées. Dans le domaine du médical, par exemple, des capsules contenant un médicament peuvent être ainsi fabriquées. Le parylène ne pouvant être dégradé par le corps humain, un système d'ouverture de la capsule est nécessaire pour délivrer la substance active.
   La description ci-dessus a été faite en se référant à un dépôt de parylène. Bien entendu, tout autre substance possédant des propriétés analogues pourrait être employée.
   On notera enfin que l'emploi d'une cavité, telle qu'un trou circulaire 40 ou un canal 28, pour guider le liquide 16, n'est pas indispensable à la réalisation des dispositifs décrits. Une technique de dépôt de matière par écriture directe, telle que l'impression jet d'encre ou le 'local dispensing', peut être employée afin de former les structures de 'liquide' destinées à être recouvertes par un film de parylène 18. Dans ce cas, le 'liquide' 16 doit être fortement repoussé par le substrat 24 de manière à ne pas s'étaler sur celui-ci. Une autre possibilité est d'utiliser un substrat repoussant fortement le liquide à déposer, et à appliquer localement, par timbrage ou impression jet d'encre, une couche dite d'acceptation. Cette couche est constituée d'une matière capable de retenir fortement le 'liquide'. Il suffit alors de tremper le substrat dans le 'liquide' 16. Seules les zones recouvertes de la couche d'acceptation seront recouverte, in fine, de 'liquide'.

## Revendications

1. Procédé de réalisation d'un dispositif à membrane, **caractérisé en ce qu'**il consiste à :
- se munir d'un substrat (10, 24, 26),
- y déposer un liquide (16), et
- recouvrir, par un procédé de dépôt à basse pression, ledit liquide (16) et au moins la portion du substrat attenante audit liquide (16), d'un film mince (18) continu homogène de matière plastique formant ladite membrane.

2. Procédé selon la revendication 1, **caractérisé en ce que** ladite matière plastique est du poly-para-xylylène, encore appelé parylène.

3. Procédé selon l'une des revendications 1 et 2, **caractérisé en ce que** ledit substrat (10, 24, 26) comporte une cavité (28, 40, 45, 48, 50) dans laquelle ledit liquide (16) est déposé.

4. Procédé selon la revendication 3, **caractérisé en ce que** ladite cavité (45) est traversante.

5. Procédé selon la revendication 3, **caractérisé en ce que** ladite cavité (28, 40, 48, 50) est borgne.

6. Procédé selon l'une des revendications 1 et 2, **caractérisé en ce que** ledit liquide (16) est déposé sur ledit substrat (10, 24, 26) directement aux emplacements où il est utile.

7. Procédé selon la revendication 6, **caractérisé en ce que** ledit liquide (16) est déposé sur ledit substrat (10, 24, 26) par une technique d'impression jet d'encre.

8. Procédé selon l'une des revendications 1 à 7, **caractérisé en ce que** ledit liquide (16) a une pression de vapeur saturante inférieure à ladite pression de dépôt.

9. Procédé selon l'une des revendications 1 à 7, **caractérisé en ce que** ledit liquide (16) est de l'huile.

10. Procédé selon la revendication 9, **caractérisé en ce que** ledit substrat (10, 24, 26) est en un matériau oléophobe.

11. Procédé selon les revendications 6 et 10, **caractérisé en ce que** ledit substrat (10, 24, 26) est recouvert localement d'une couche oléophile formant des structures destinées à recevoir de l'huile.

12. Procédé selon l'une des revendications 1 à 11, **caractérisé en ce que** ledit liquide (16) est conservé après dépôt.

13. Procédé selon l'une des revendication 1 à 11, **caractérisé en ce que** ledit liquide (16) est éliminé après le dépôt.

14. Dispositif à membrane, **caractérisé en ce qu'**il est obtenu par le procédé selon l'une des revendications 1 à 13.

15. Dispositif selon la revendication 14, **caractérisé en ce que** ledit substrat (24, 26) forme avec ledit liquide (16) et ladite membrane (18), une lentille optique.

16. Dispositif selon la revendication 14, **caractérisé en ce que** ledit substrat (24) forme avec ledit liquide (16) et ladite membrane (18), un guide d'onde.

17. Dispositif selon la revendication 14, **caractérisé en ce que** ledit substrat (24) forme avec ledit liquide (16) et ladite membrane (18), un actuateur.

18. Dispositif selon la revendication 14, **caractérisé en ce que** ledit substrat (24, 26) forme avec ladite membrane(18), un canal fluidique.

19. Dispositif selon la revendication 14, **caractérisé en ce qu'**il est formé de deux membranes (18, 52) renfermant un liquide (16).

20. Procédé de réalisation d'une membrane, selon la revendication 1 **caractérisé en ce qu'**il comprenne l'étape supplémentaire de détacher ladite membrane du liquide.

21. Procédé selon la revendication 20, **caractérisé en ce que** ladite matière plastique est du poly-para-xylylène, encore appelé parylène.

22. Procédé selon l'une des revendications 20 et 21, **caractérisé en ce que** ledit liquide (16) a une pression de vapeur saturante inférieure à ladite pression de dépôt.

23. Procédé selon l'une des revendications 20 et 21, **caractérisé en ce que** ledit liquide (16) a une pression de vapeur saturante de l'ordre de ladite pression de dépôt.

24. Procédé selon l'une des revendications 20 à 23, **caractérisé en ce** ladite membrane est séparée dudit liquide (16) par pelage de manière à constituer un film mince (18) autoporteur.

25. Procédé selon les revendications 23 et 24, **caractérisé en ce que** ledit film mince (18) possède deux faces ayant des propriétés physiques différentes.

## Claims

1. Method of producing a membrane device, **characterized in that** it consists in:
- providing a substrate (10, 24, 26);
- depositing a liquid (16) thereon; and
- covering said liquid (16) and at least that portion of the substrate adjoining said liquid (16), by a low-pressure deposition process, with a homogeneous continuous thin film (18) of a plastic forming said membrane.

2. Method according to Claim 1, **characterized in that** said plastic is poly-para-xylylene, also called parylene.

3. Method according to either of Claims 1 and 2, **characterized in that** said substrate (10, 24, 26) includes a cavity (28, 40, 45, 48, 50) in which said liquid (16) is deposited.

4. Method according to Claim 3, **characterized in that** said cavity (45) is a through-cavity.

5. Method according to Claim 3, **characterized in that** said cavity (28, 40, 48, 50) is a blind cavity.

6. Method according to either of Claims 1 and 2, **characterized in that** said liquid (16) is deposited on said substrate (10, 24, 26) directly at the places where it is useful.

7. Method according to Claim 6, **characterized in that** said liquid (16) is deposited on said substrate (10, 24, 26) by an ink-jet printing technique.

8. Method according to one of Claims 1 to 7, **characterized in that** said liquid (16) has a saturation vapour pressure below said deposition pressure.

9. Method according to one of Claims 1 to 7, **characterized in that** said liquid (16) is an oil.

10. Method according to Claim 9, **characterized in that** said substrate (10, 24, 26) is made of an oleophobic material.

11. Method according to Claim 6 and 10, **characterized in that** said substrate (10, 24, 26) is locally covered by an oleophilic layer forming structures intended to receive oil.

12. Method according to one of Claims 1 to 11, **characterized in that** said liquid (16) is preserved after deposition.

13. Method according to one of Claims 1 to 11, **characterized in that** said liquid (16) is removed after deposition.

14. Membrane device, **characterized in that** it is obtained by the method according to one of Claims 1 to 13.

15. Device according to Claim 14, **characterized in that** said substrate (24, 26) forms, with said liquid (16) and said membrane (18), an optical lens.

16. Device according to Claim 14, **characterized in that** said substrate (24) forms, with said liquid (16) and said membrane (18) a waveguide.

17. Device according to Claim 14, **characterized in that** said substrate (24) forms, with said liquid (16) and said membrane (18), an actuator.

18. Device according to Claim 14, **characterized in that** said substrate (24, 26) forms, with said membrane (18), a fluidic channel.

19. Device according to Claim 14, **characterized in that** it is formed from two membranes (18, 52) that contain a liquid (16).

20. Method of producing a membrane according to Claim 1, **characterized in that** it includes the additional step of detaching said membrane from the liquid.

21. Method according to Claim 20, **characterized in that** said plastic is poly-para-xylylene, also called parylene.

22. Method according to either of Claims 20 and 21, **characterized in that** said liquid (16) has a saturation vapour pressure below said deposition pressure.

23. Method according to either of Claims 20 and 21, **characterized in that** said liquid (16) has a saturation vapour pressure of about said deposition pressure.

24. Method according to one of Claims 20 to 23, **characterized in that** said membrane is separated from said liquid (16) by peeling, so as to constitute a self-supporting thin film (18).

25. Method according to either of Claims 23 and 24, **characterized in that** said thin film (18) has two faces having different physical properties.

## Patentansprüche

1. Verfahren zum Herstellen einer Membranvorrichtung, **dadurch gekennzeichnet, dass** es darin besteht:
- ein Substrat (10, 24, 26) vorzusehen,
- darauf eine Flüssigkeit (16) abzulagern und
- die Flüssigkeit (16) und wenigstens den an die Flüssigkeit (16) angrenzenden Abschnitt des Substrats durch ein Niederdruck-Ablagerungsverfahren mit einer homogenen, ununterbrochenen Dünnschicht (18) aus Kunststoff, die die Membran bildet, abzudecken.

2. Verfahren nach Anspruch 1, **dadurch gekennzeichnet, dass** der Kunststoff Polyparaxylylen, das auch Parylen genannt wird, ist.

3. Verfahren nach einem der Ansprüche 1 und 2, **dadurch gekennzeichnet, dass** das Substrat (10, 24, 26) einen Hohlraum (28, 40, 45, 48, 50) aufweist, in dem die Flüssigkeit (16) abgelagert wird.

4. Verfahren nach Anspruch 3, **dadurch gekennzeichnet, dass** der Hohlraum (45) durchgängig ist.

5. Verfahren nach Anspruch 3, **dadurch gekennzeichnet, dass** der Hohlraum (28, 40, 48, 50) blind ist.

6. Verfahren nach einem der Ansprüche 1 und 2, **dadurch gekennzeichnet, dass** die Flüssigkeit (16) auf dem Substrat (10, 24, 26) direkt an den Stellen, an denen sie gebraucht wird, abgelagert wird.

7. Verfahren nach Anspruch 6, **dadurch gekennzeichnet, dass** die Flüssigkeit (16) auf dem Substrat (10, 24, 26) durch eine Tintenstrahldrucktechnik abgelagert wird.

8. Verfahren nach einem der Ansprüche 1 bis 7, **dadurch gekennzeichnet, dass** die Flüssigkeit (16) einen Sättigungsdampfdruck unterhalb des Ablagerungsdrucks hat.

9. Verfahren nach einem der Ansprüche 1 bis 7, **dadurch gekennzeichnet, dass** die Flüssigkeit (16) Öl ist.

10. Verfahren nach Anspruch 9, **dadurch gekennzeichnet, dass** das Substrat (10, 24, 26) ein ölabstoßendes Material ist.

11. Verfahren nach den Ansprüchen 6 und 10, **dadurch gekennzeichnet, dass** das Substrat (10, 24, 26) lokal mit einer ölanziehenden Schicht, die Strukturen bildet, die dazu vorgesehen sind, das Öl aufzunehmen, abgedeckt ist.

12. Verfahren nach einem der Ansprüche 1 bis 11, **dadurch gekennzeichnet, dass** die Flüssigkeit (16) nach der Ablagerung aufbewahrt wird.

13. Verfahren nach einem der Ansprüche 1 bis 11, **dadurch gekennzeichnet, dass** die Flüssigkeit (16) nach der Ablagerung beseitigt wird.

14. Membranvorrichtung, **dadurch gekennzeichnet, dass** sie durch das Verfahren nach einem der Ansprüche 1 bis 13 erhalten wird.

15. Vorrichtung nach Anspruch 14, **dadurch gekennzeichnet, dass** das Substrat (24, 26) mit der Flüssigkeit (16) und der Membran (18) eine optische Linse bildet.

16. Vorrichtung nach Anspruch 14, **dadurch gekennzeichnet, dass** das Substrat (24) mit der Flüssigkeit (16) und der Membran (18) einen Wellenleiter bildet.

17. Vorrichtung nach Anspruch 14, **dadurch gekennzeichnet, dass** das Substrat (24) mit der Flüssigkeit (16) und der Membran (18) einen Aktor bildet.

18. Vorrichtung nach Anspruch 14, **dadurch gekennzeichnet, dass** das Substrat (24, 26) mit der Membran (18) einen Fluidkanal bildet.

19. Vorrichtung nach Anspruch 14, **dadurch gekennzeichnet, dass** sie aus zwei Membranen (18, 52), die eine Flüssigkeit (16) einschließen, gebildet ist.

20. Verfahren zum Herstellen einer Membran nach Anspruch 1, **dadurch gekennzeichnet, dass** es den zusätzlichen Schritt des Ablösens der Membran von der Flüssigkeit umfasst.

21. Verfahren nach Anspruch 20, **dadurch gekennzeichnet, dass** der Kunststoff Polyparaxylylen, das auch Parylen genannt wird, ist.

22. Verfahren nach einem der Ansprüche 20 und 21, **dadurch gekennzeichnet, dass** die Flüssigkeit (16) einen Sättigungsdampfdruck unterhalb des Ablagerungsdrucks hat.

23. Verfahren nach einem der Ansprüche 20 und 21, **dadurch gekennzeichnet, dass** die Flüssigkeit (16) einen Sättigungsdampfdruck in der Größenordnung des Ablagerungsdrucks hat.

24. Verfahren nach einem der Ansprüche 20 bis 23, **dadurch gekennzeichnet, dass** die Membran von der Flüssigkeit (16) durch Abziehen getrennt wird, derart, dass eine selbsttragende Dünnschicht (18) gebildet wird.

25. Verfahren nach den Ansprüchen 23 und 24, **dadurch gekennzeichnet, dass** die Dünnschicht (18) zwei Seiten besitzt, die unterschiedliche physikalische Eigenschaften haben.
